(19) Europäisches Patentamt
European Patent Office
Office européen des brevets

(11) **EP 2 264 416 A1**

(12) **DEMANDE DE BREVET EUROPEEN**

(43) Date de publication:
**22.12.2010 Bulletin 2010/51**

(51) Int Cl.:
***G01J 3/45*** *(2006.01)*     ***G01J 3/453*** *(2006.01)*

(21) Numéro de dépôt: **10166380.5**

(22) Date de dépôt: **17.06.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **19.06.2009 FR 0902994**

(71) Demandeurs:
• **Thales**
**92200 Neuilly Sur Seine (FR)**

• **Centre National d'Etudes Spatiales**
**75039 Paris Cedex 01 (FR)**

(72) Inventeurs:
• **SIMEMONI, Denis**
**31100, TOULOUSE (FR)**
• **CHETRITE, Bruno**
**31100, TOULOUSE (FR)**
• **PIGOUCHE, Olivier**
**06130, GRASSE (FR)**
• **BUIL, Christian**
**75039, PARIS CEDEX 01 (FR)**

(54) **Système et procédé d'interférométrie statique.**

(57) L'invention porte sur un système d'interférométrie statique comprenant deux miroirs réalisés respectivement par assemblage vertical (EH) et horizontal (EV) d'un ensemble de lames parallèles de largeur constante, décalées le long de l'axe optique de manière à former des échelettes de différence de marche variable, lesdits deux miroirs à échelettes (EH, EV) étant disposés orthogonalement de manière à former, par superposition optique, un ensemble de facettes carrées provoquant des différences de marche différentes pour le signal incident, et un dispositif de détection (DET) de l'ensemble des différences de marche de l'interférogramme résultant. Le système comprend, en outre, des moyens de variation continue (LC) de la différence de marche durant l'acquisition de données par le dispositif de détection (DET), et des moyens d'échantillonnage (S, ACQL) pour échantillonner la différence de marche continue acquise en respectant le critère de Nyquist.

FIG.6

EP 2 264 416 A1

**Description**

L'invention porte sur un système et un procédé d'interférométrie statique comprenant deux miroirs, par exemple pour analyser un spectre étroit dans un large domaine spectral.

Un interféromètre de Michelson classique comprend deux miroirs plans associés à une séparatrice de sorte qu'un faisceau incident pénétrant dans l'interféromètre produit un couple de faisceaux séparés et parallèles en sortie de l'interféromètre présentant entre eux une différence de marche que l'on peut faire varier en déplaçant l'un des miroirs.

Cet interféromètre permet, entre autres, de déterminer la nature exact d'une radiation monochromatique.

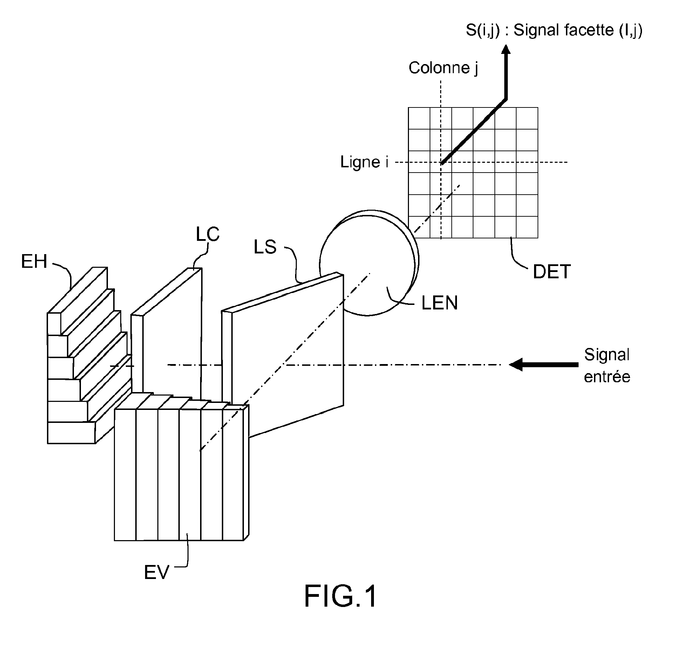

Le document FR 2787186 (CENTRE NATIONAL D'ETUDES SPATIALES) porte sur un interféromètre statique utilisant deux miroirs EH et EV réalisés par l'assemblage d'un ensemble de lames d'épaisseur constante. Les lames sont décalées le long de l'axe optique afin de former des échelettes de différence de marche variable. Les lames des deux miroirs sont assemblées orthogonalement afin de constituer, par superposition optique des deux miroirs, un ensemble de facettes carrées de différences de marche différentes. L'image des deux miroirs est conjuguée, à l'aide d'une lentille convergente LEN, avec un dispositif de détection DET afin de réaliser l'acquisition simultanée de l'ensemble des différences de marche de l'interférogramme. La figure 1 représente schématiquement un tel dispositif. Un tel interféromètre fournit, à partir d'un même faisceau incident, une pluralité de couples de faisceaux en sortie, présentant des différences de marche fixes et distinctes.

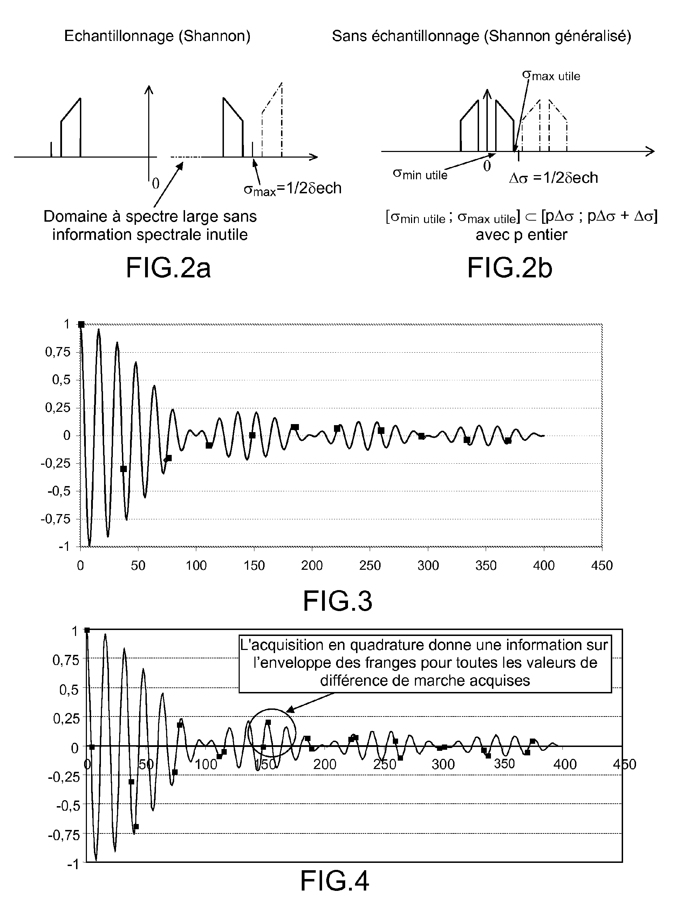

Le principe de l'interférométrie statique est basé sur le théorème de Shannon Généralisé qui définit les conditions de sous-échantillonnage d'un interférogramme, qui permettent d'obtenir une restitution du spectre sans recouvrement. L'application du théorème de Shannon Généralisé est très efficace lorsque le domaine spectral observé $\Delta\sigma_{max}$ est très largement inférieur à la plus petite longueur d'onde $\sigma_{min}$. Dans ce cas le nombre d'échantillons à acquérir peut-être largement réduit par rapport à une acquisition interférométrique classique qui respecte les conditions du théorème de Shannon. Cela est illustré schématiquement sur les figures 2a et 2b.

Le principe de l'interférométrie est de réaliser l'acquisition d'un interférogramme sous-échantillonné, comme illustré sur la figure 3.

Il a été mis en évidence par le Centre National d'Etudes Spatiales, que l'on a un gain important en rapport signal à bruit lorsque deux points en quadrature de phase sont acquis pour chacune des différences de marche, comme illustré sur la figure 4.

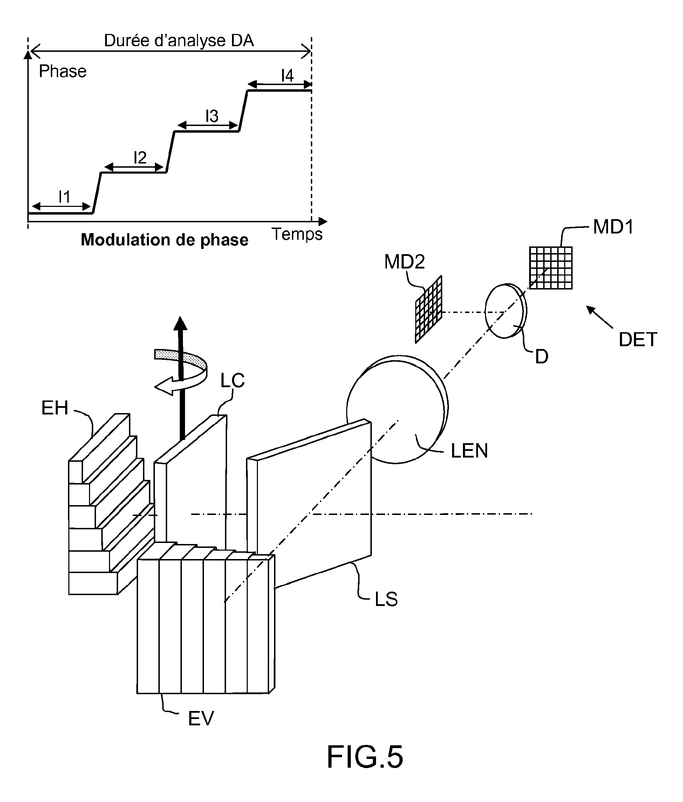

Une solution connue pour acquérir des données en quadrature de phase, simultanément dans plusieurs bandes spectrales, est illustrée sur la figure 5. Cette solution consiste à établir, pendant la durée d'analyse DA du signal, quatre phases différentes pour chaque différence de marche, et à acquérir le signal pendant le temps d'acquisition correspondant I1, I2, I3, et I4. La variation de phase est créée par un élément mobile dans l'interféromètre, telle une rotation de lame compensatrice LC dans l'exemple de figure 5. Plusieurs bandes peuvent être obtenues simultanément par une séparation spectrale en sortie de l'interféromètre. Dans le cas d'un système à deux bandes selon la figure 5, le dispositif de détection DET comprend deux matrices de dispositif de détection MD1 et MD2 et un élément de séparation dichroïque D.

Le signal utile, ou partie modulée du signal, est obtenu en réalisant la différence entre deux échantillons de phase opposée. Le rapport signal à bruit de cette différence est optimal si les deux termes soustraits sont exactement en opposition de phase.

Une amélioration sensible du rapport signal à bruit dans le domaine du spectre a été constatée si deux informations en quadrature de phase étaient fournies par différence de marche. Cette amélioration du rapport signal à bruit est due, d'une part à une diminution du bruit de régularisation, le processus de régularisation générant un bruit de régularisation, et d'autre part à une diminution de l'amplification de bruit, le bruit originel au niveau de l'interférogramme étant amplifié par le processus de régularisation. L'optimisation du rapport signal à bruit nécessite donc que le système fournisse deux informations, issues de la différence des termes en opposition de phase, en quadrature de phase. Ce résultat est obtenu en faisant l'acquisition de 4 phases régulièrement espacées.

Pour une bande centrée à la longueur d'onde $\lambda_1$, la modulation est obtenue par soustraction des signaux en opposition de phase 1 et 3 puis 2 et 4:

$$\begin{cases} Phase\ 1 - Phase\ 3 = 2\pi(\Delta1 - \Delta3)/\lambda_1 = \pi \\ Phase\ 2 - Phase\ 4 = 2\pi(\Delta2 - \Delta4)/\lambda_1 = \pi \end{cases}$$

ce qui implique un écart de différences de marche $\Delta = \Delta1 - \Delta3 = \Delta2 - \Delta4 = \lambda_1/2$

Les informations issues des deux soustractions sont en quadrature de phase si les conditions suivantes sont réalisées :

$$Phase\,1 - Phase\,2 = 2\pi(\Delta 1 - \Delta 2)/\lambda_1 = \pi/2$$

ce qui impose un écart de différences de marche $\Delta 1 - \Delta 2 = \lambda_1/4$

Ce principe impose donc quatre états de phase séparées de $\pi/2$, respectivement quatre états de différences de marche séparées de $\lambda_1/4$.~ On constate que cette condition ne peut être respectée que pour la longueur d'onde $\lambda_1$.

L'adaptation à une deuxième longueur d'onde $\lambda_2$, en cas d'implantation d'une autre bande spectrale, nécessite de déroger à une des deux contraintes établies précédemment. Par exemple, si la longueur d'onde de la 2ème bande $\lambda_2$ est quasiment double de la longueur d'onde de la première bande $\lambda_1$, la modulation est obtenue par différence des phases 1 et 2 puis 3 et 4, la soustraction résultante n'est pas en opposition de phase :

$$\begin{cases} Phase\,1 - Phase\,2 = 2\pi(\Delta 1 - \Delta 2)/\lambda_2 = \pi/2\,\lambda_1/\lambda_2 \approx \pi/4 \\ Phase\,3 - Phase\,4 = 2\pi(\Delta 2 - \Delta 4)/\lambda_1 = \pi/2\,\lambda_1/\lambda_2 \approx \pi/4 \end{cases}$$

Les deux informations issues des deux soustractions restent en quadrature de phase si la relation suivante est respectée :

$$\begin{cases} Phase\,1 - Phase\,3 = 2\pi(\Delta 1 - \Delta 3)/\lambda_1 = \dfrac{3\pi}{2} \\ Phase\,2 - Phase\,4 = 2\pi(\Delta 2 - \Delta 4)/\lambda_1 = \dfrac{3\pi}{2} \end{cases}$$

A la longueur d'onde $\lambda_2$ la modulation est obtenue par différence des phases 1 et 3 puis 2 et 4

$$\begin{cases} Phase\,1 - Phase\,3 = 2\pi(\Delta 1 - \Delta 3)/\lambda_2 = 3\pi/2\,\lambda_1/\lambda_2 \approx 3\pi/4 \\ Phase\,2 - Phase\,4 = 2\pi(\Delta 2 - \Delta 4)/\lambda 2 = 3\pi/2\,\lambda_1/\lambda_2 \approx 3\pi/4 \end{cases}$$

Les deux informations issues des deux soustractions restent en quadrature de phase :

$$Phase1 - Phase2 = 2\pi(\Delta_1 - \Delta_2)/\lambda_2 \approx \pi/2$$

On constate que le principe de l'acquisition à quatre phases s'accommode imparfaitement d'un système à deux bandes spectrales.

Lorsque deux bandes spectrales sont acquises (présentant un rapport de deux entre les longueurs d'onde centrales dans l'exemple ci-dessus), la condition d'opposition de phase n'est pas respectée pour les deux bandes ($3\pi/4$ au lieu de $\pi$ à la longueur d'onde $\lambda_2$ dans l'exemple ci-dessus), ce qui se traduit par une dégradation du rapport signal à bruit de la bande désaccordée. C'est une contrainte importante d'adaptation du principe à une analyse simultanée de plusieurs bandes.

Le principe illustré sur la figure 5 présente des inconvénients. Il nécessite d'introduire un élément mobile au coeur de l'interféromètre qui doit être très stable. L'acquisition des quatre phases dans la durée d'analyse nécessite des durées de changements de phases qui doivent être faibles par rapport aux durées d'acquisition, et les phases sont optimisées du point de vue du rapport signal à bruit pour une seule des bandes spectrales acquises.

Un problème posé est donc l'obtention de deux informations en quadrature de phase, pour chacune des différences de marche, dans des conditions de rapport signal à bruit optimales, et ce pour plusieurs bandes spectrales acquises simultanément, aux mêmes positions.

Il serait également intéressant de faire l'acquisition de telles informations en quadrature de phase, avec un interféromètre statique, sans mettre en oeuvre de modulation de phase afin d'éviter d'introduire un élément mobile au coeur de l'interféromètre.

Une réalisation d'acquisition en opposition ou en quadrature de phase basée sur l'augmentation du nombre d'échelettes par miroir et un positionnement très précis des échelettes des miroirs nécessiterait une précision de positionnement des échelettes très inférieure au micron, ce qui est difficilement conciliable, voire incompatible avec les contraintes de réalisation des miroirs de l'interféromètre, pour lesquels la précision actuelle est de l'ordre de quelques microns.

Un but de l'invention est de pallier les divers problèmes précédemment cités.

Il est proposé, selon un aspect de l'invention, un système d'interférométrie statique comprenant deux miroirs réalisés respectivement par assemblage vertical et horizontal d'un ensemble de lames parallèles de largeur constante, décalées le long de l'axe optique de manière à former des échelettes de différence de marche variable, lesdits deux miroirs à échelettes étant disposés orthogonalement de manière à former, par superposition optique, un ensemble de facettes carrées provoquant des différences de marche différentes pour le signal incident. Le système comprend, en outre, des moyens de variation continue de la différence de marche, un dispositif de détection de l'ensemble des différences de marche de l'interférogramme résultant, et des moyens de variation continue de la différence de marche, et des moyens d'échantillonnage pour échantillonner ladite différence de marche continue en respectant le critère de Nyquist.

Un tel système permet d'obtenir un continuum de phases par facette de différence de marche, à partir desquels peut-être obtenu de façon optimale l'amplitude de modulation pour deux points en quadrature de phase et ce pour différentes bandes spectrales acquises simultanément.

Selon un mode de réalisation, lesdits moyens de variation continue sont adaptés pour effectuer une modulation de phase à défilement continu dynamique, de sorte que la phase du signal varie sensiblement linéairement en fonction du temps d'acquisition de la différence de marche par ledit dispositif de détection et les moyens d'échantillonnage sont adaptés pour échantillonner la différence de marche à pas constant par un signal issu d'une source laser.

Ainsi, la variation de différence de marche peut-être réalisée de façon continue et linéaire au cours du temps d'analyse. La vitesse de variation de différence de marche est proportionnelle au rapport entre la variation de différence de marche à acquérir et le temps d'analyse de la scène disponible. Il est recommandé d'acquérir une différence de marche correspondant à au moins une longueur d'onde de la bande spectrale qui présente la plus grande longueur d'onde.

Au cours de la durée d'analyse, les phases sont acquises successivement, sans perte de temps entre deux acquisitions autre que celle nécessaire au système de détection pour enchaîner deux acquisitions. Un tel système permet d'acquérir un ensemble de phase sans que le dispositif modulation de phase à défilement continu dynamique ne vienne limiter le temps d'analyse et donc l'efficacité du système.

Par exemple, lesdits moyens de variation continue comprennent une lame compensatrice et des moyens de mise en rotation de ladite lame compensatrice. L'angle de rotation dépend de l'épaisseur de la lame compensatrice et de la différence de marche à créer.

Ce mode de réalisation permet d'introduire une variation de différence de marche sans modification de la conception de l'interféromètre autre que la mise en rotation de la lame compensatrice.

Par exemple, lesdits moyens de variation continue comprennent une lame compensatrice présentant un biseau et des moyens de mise en translation de ladite lame compensatrice. La distance de translation à appliquer est adaptée en fonction de la valeur du biseau de la lame compensatrice.

Ainsi des déplacements linéaires réduits suffisent, dépendant de l'angle de biseau de la lame compensatrice.

Par exemple, lesdits moyens de variation continue comprennent deux lames compensatrices, et des moyens de mise en rotations opposées desdites lames compensatrices.

La rotation opposée des deux lames compensatrices permet une compensation optique et une limitation des efforts exportés du système d'actionnement des deux lames.

Par exemple, lesdits moyens de variation continue comprennent deux lames compensatrices présentant des biseaux opposés et des moyens de mise en translation opposées desdites lames compensatrices.

Les biseaux opposés des deux lames compensatrices permettent une compensation optique de l'effet de biseau sur la qualité des interférogrammes acquis, et la translation opposée des deux lames compensatrices évite la propagation des efforts d'actionnement des deux lames compensatrices à l'extérieur du système d'actionnement des lames compensatrices. On a ainsi une compensation des efforts exportés.

Par exemple, lesdits moyens de variation continue comprennent des moyens de mise en translation d'au moins un desdits miroirs à échelettes.

La translation d'au moins un desdits miroirs à échelettes est réalisée sur des courses très réduites, de l'ordre de la longueur d'onde. Ce mode de réalisation permet d'introduire une variation de différence de marche sans modification de la conception de l'interféromètre autre que la mise en translation d'un desdits miroirs à échelettes.

Dans un mode de réalisation, lesdits moyens d'échantillonnage sont adaptés pour échantillonner la différence de marche à pas de différence de marche constant par un signal issu de ladite source laser.

L'échantillonnage à pas de différence de marche constant réduit les effets de variations de vitesse de la différence de marche sur la qualité des interférogrammes acquis.

Dans un autre mode de réalisation, lesdits moyens d'échantillonnage sont adaptés pour échantillonner la différence de marche à pas de temps constant.

L'échantillonnage de la différence de marche à pas de temps constant, est le mode d'échantillonnage classique des matrices de dispositif de détections. Le temps d'acquisition par échantillon est constant.

Selon un autre mode de réalisation, lesdits moyens de variation continue comprennent une inclinaison d'un desdits miroirs à échelettes créant pour chaque différence de marche de facette un ensemble de franges statiques dans le plan dudit dispositif de détection.

La variation continue de différence de marche est réalisée sans introduction d'un élément mobile dans l'interféromètre. L'interféromètre est alors parfaitement statique et stable.

Ladite inclinaison, exprimée en radians, peut valoir sensiblement la valeur définie par l'expression suivante :

$$\left(\lambda/2\right)/\left(N\times L\arg Ech\right)$$

dans laquelle :

λ représente la longueur d'onde centrale de la bande spectrale du signal incident, en m ;
LargEch représente la largeur d'une échelette, en m ; et
N représente le nombre de franges désirées par facette.

Il est également proposé, selon un autre aspect de l'invention, un procédé d'interférométrie statique utilisant deux miroirs réalisés respectivement par assemblage vertical et horizontal d'un ensemble de lames parallèles de largeur constante, décalées le long de l'axe optique de manière à former des échelettes de différence de marche variable, lesdits deux miroirs à échelettes étant disposés orthogonalement de manière à former, par superposition optique, un ensemble de facettes carrées provoquant des différences de marche différentes pour le signal incident, et un dispositif de détection de l'ensemble des différences de marche de l'interférogramme résultant. On fait varier continûment la différence de marche durant l'acquisition de données par le dispositif de détection, et on échantillonne la différence de marche continue acquise en respectant le critère de Nyquist.

L'invention sera mieux comprise à l'étude de quelques modes de réalisation décrits à titre d'exemples nullement limitatifs et illustrés par les dessins annexés sur lesquels :

- les figures 1 à 5 illustrent l'art antérieur;
- la figure 6 est un schéma synoptique d'un mode de réalisation d'un système selon un aspect de l'invention, avec une modulation de phase continue dynamique ;
- la figure 7a illustre le fonctionnement d'un mode de réalisation d'un système de la figure 6 selon un aspect de l'invention ;
- la figure 7b illustre le fonctionnement d'un mode de réalisation d'un système de la figure 6 selon un autre aspect de l'invention ;
- les figures 8, 9 et 10 illustrent un système selon un aspect de l'invention, avec une modulation de phase continue statique ; et
- La figure 11 met en évidence des avantages de l'invention.

Sur les différentes figures, les éléments ayant des références identiques sont identiques.

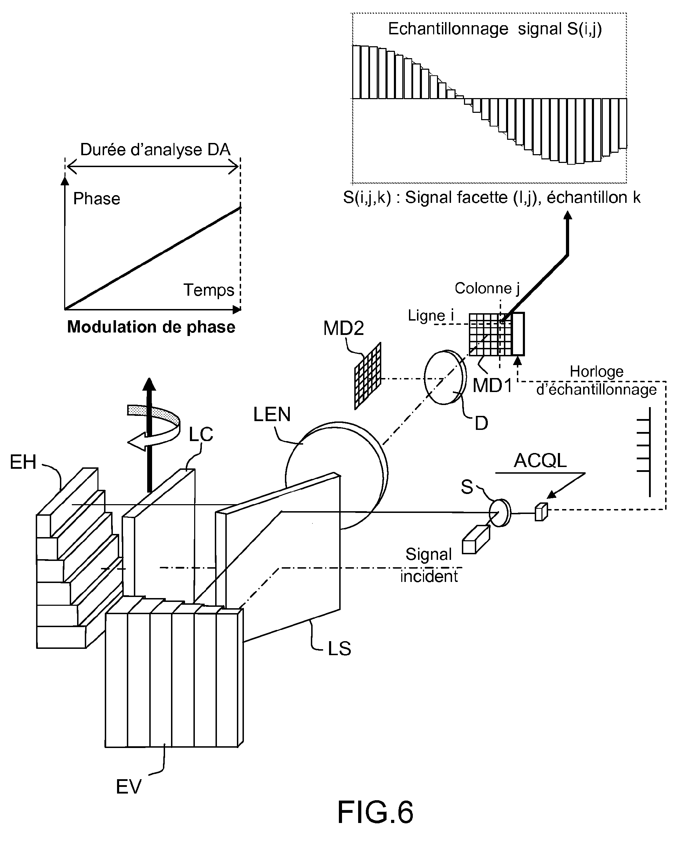

Tel qu'illustré sur la figure 6, un système d'interférométrie statique comprend deux miroirs EH et EV réalisés respectivement par assemblage vertical et horizontal d'un ensemble de lames parallèles de largeur constante, décalées le long de l'axe optique de manière à former des échelettes de différence de marche variable. Les deux miroirs EH et EV sont disposés orthogonalement, et forment, par superposition optique, un ensemble de facettes carrées provoquant des différences de marche différentes pour le signal incident. Le système comprend également un dispositif de détection DET de l'ensemble des différences de marche de l'interférogramme résultant, comprenant deux matrices de détecteur MD1 et MD2 et un élément de séparation dichroïque D.

Le système comprend également des moyens de variation continue, par exemple un lame compensatrice LC, pour faire varier continûment la différence de marche durant l'acquisition de données par le dispositif de détection MD1 et MD2, et des moyens d'échantillonnage S et ACQL. Les moyens de variation continue font, de préférence, varier sensiblement linéairement la phase du signal au cours du temps d'analyse DA.

Les moyens de variation continue représentés sur la figure 6 comprennent une lame compensatrice LC et des moyens de mise en rotation de ladite lame compensatrice, non représentés sur la figure 6. En variante, les moyens de variation continue pourraient, par exemple, comprendre deux lames compensatrices et des moyens de mise en rotations opposées desdites lames compensatrices. En variante, les moyens de variation continue pourraient, par exemple, comprendre une lame compensatrice présentant un biseau et des moyens de mise en translation de ladite lame compensatrice, ou deux lames compensatrices présentant des biseaux opposés et des moyens de mise en translations opposées desdites lames compensatrices, ou comprendre des moyens de mise en translation d'au moins un des deux miroirs à échelettes EH, EV.

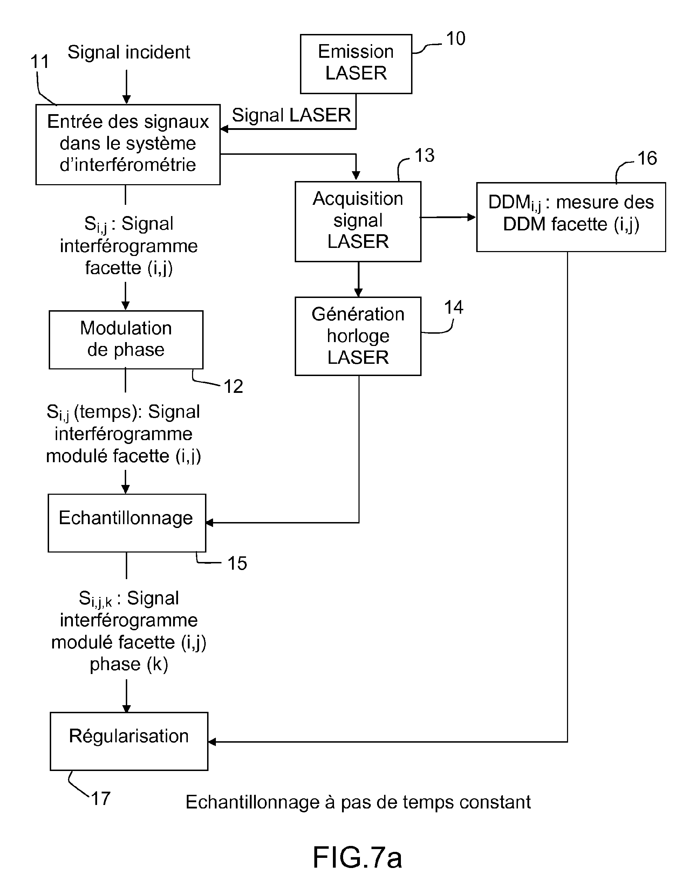

La figure 6 illustre une réalisation d'une variation continue des différences de marche en utilisant un mécanisme de phase à défilement continu échantillonné à pas de différence de marche constant par un signal de cadencement d'horloge en phase avec les variations de différence de marche. L'horloge est conçue à partir du faisceau optique d'une source laser injecté dans l'interféromètre. Cette mise en oeuvre, appelée modulation de phase continue avec échantillonnage à pas de différence de marche constant est illustrée sur la figures 7a.

Sur la figure 7a, un signal incident ou signal atmosphérique, et un signal laser émis par une source laser (étape 10), sont reçus par un système d'interférométrie selon un aspect de l'invention (étape 11). Le système acquiert un ensemble de signaux $S_{i,j}$ correspondant aux interférogrammes respectifs des facettes d'indices de ligne i et de colonne j. Une modulation de phase (étape 12) est appliquée à chacun des signaux $S_{i,j}$. En parallèle, une acquisition du signal laser est effectuée (étape 13), à partir de laquelle une génération d'horloge est effectuée (étape 14) permettant un échantillonnage (étape 15) à pas de différence de marche constant des signaux $S_{i,j}$ correspondant aux interférogrammes modulés respectifs des facettes d'indices de ligne i et de colonne j. On obtient des signaux $S_{i,j,k}$ correspondant aux interférogrammes modulés respectifs des facettes d'indices de ligne i et de colonne j et de phase k (échantillon k). En variante, le signal laser peut également permettre de mesurer les différences de marche $DDM_{i,j}$ de l'ensemble des facettes d'indices i,j (étape 16) permettant une régularisation (étape 17) dans laquelle on corrige l'irrégularité de l'échantillonnage en différence de marche induit par la construction des miroirs à échelettes, dont la régularité à l'échelle du nanomètre est limitée.

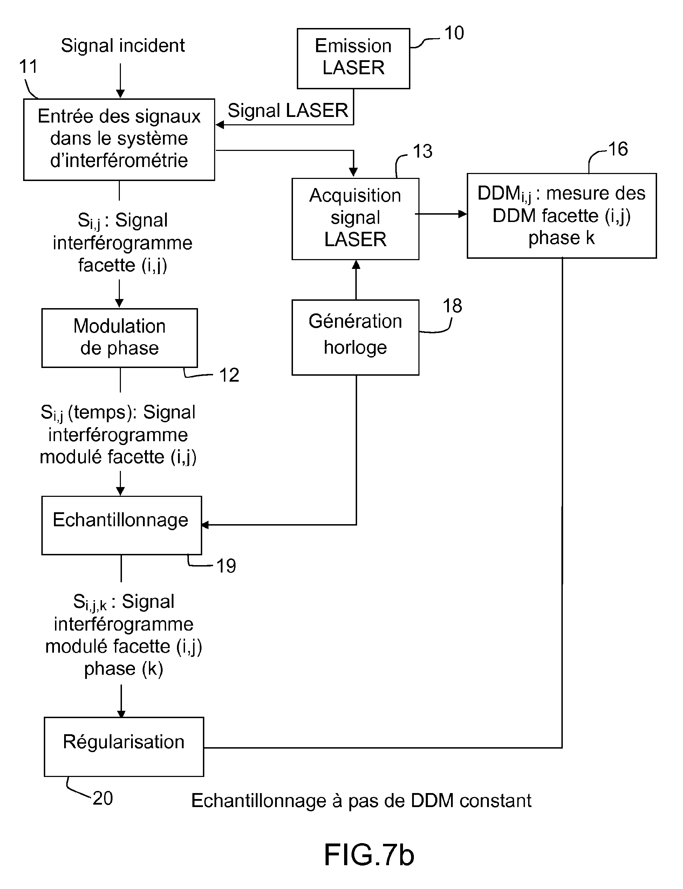

La figure 7b présente une variante, à modulation de phase continue avec échantillonnage à pas de différence de marche constant, qui correspond à un échantillonnage à pas de temps constant. Sur la figure 7b, un signal incident ou signal atmosphérique, et un signal laser émis par une source laser (étape 10), sont reçus par un système d'interférométrie selon un aspect de l'invention (étape 11). Le système acquiert un ensemble de signaux $S_{i,j}$ correspondant aux interférogrammes respectifs des facettes d'indices de ligne i et de colonne j. Une modulation de phase (étape 12) est appliquée à chacun des signaux $S_{i,j}$. En parallèle, une acquisition du signal laser est effectuée (étape 13). L'échantillonnage du signal laser est déclenché simultanément à celle du signal d'interférogramme par un signal de cadencement émis par une horloge commune (étape 18). Le signal laser est utilisé pour mesurer la variation de différence de marche (étape 16), de chaque échantillon acquis (échantillon k). L'horloge (étape 18) déclenche un échantillonnage (étape 19) des signaux $S_{i,j}$ correspondant aux interférogrammes modulés respectifs des facettes d'indices de ligne i et de colonne j. On obtient des signaux $S_{i,j,k}$ correspondant aux interférogrammes modulés respectifs des facettes d'indices de ligne i et de colonne j et de phase k (échantillon k). Le signal laser permet de mesurer des différences de marche $DDM_{i,j}$ de l'ensemble des facettes d'indices i,j (étape 16) pour chaque phase k. Ainsi, une régularisation (étape 20) permet de passer d'un échantillonnage à pas de temps constant à un échantillonnage à pas de différence de marche constant, et de corriger l'irrégularité de l'échantillonnage (étape 19) en différence de marche induit par la construction des miroirs à échelettes, dont la régularité à l'échelle du nanomètre est limitée.

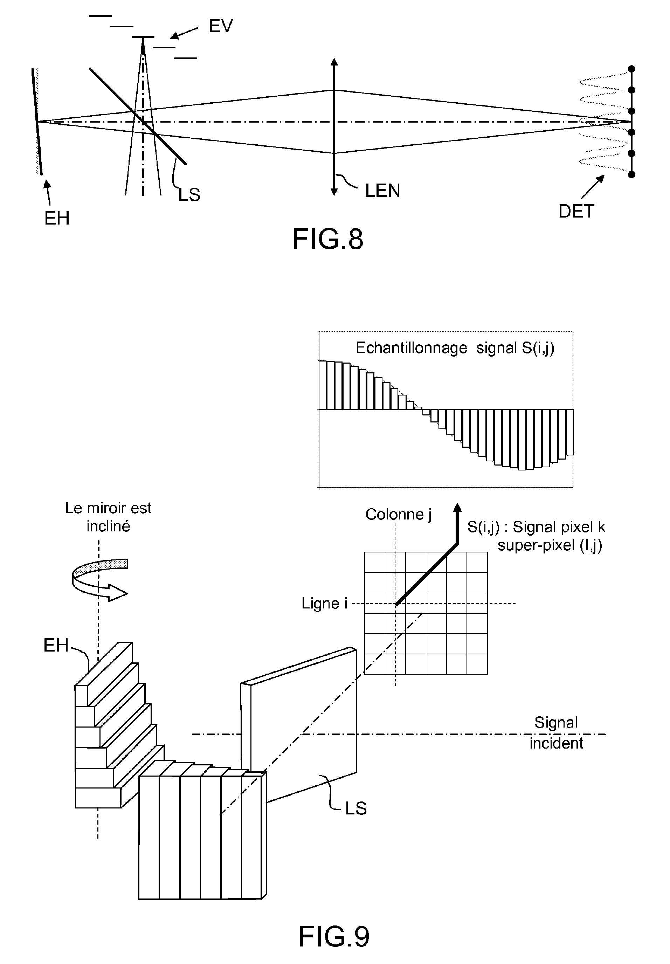

Sur la figure 8 est représenté, en variante, un système d'interférométrie selon un aspect de l'invention, dans lequel les moyens de variation continue comprennent une inclinaison ou tilt en langue anglaise d'un desdits miroirs à échelettes créant pour chaque différence de marche de facette un ensemble de franges statiques dans le plan dudit dispositif de détection. Sur la figure 8, l'inclinaison est réalisée sur le miroir à échelettes horizontales EH, dont une seule est représenté pour des raisons de clarté de la figure 8, mais en variante, l'inclinaison peut être réalisée sur le miroir à échelettes verticales EV, ou sur les deux miroirs EV et EH. Une lentille LEN convergente est représentée sur la figure 8.

Le système de franges se présente, dans le plan du dispositif de détection DET, sous la forme d'une modulation le long d'une direction (axe ligne) par facette de différence de marche. Cette modulation est échantillonnée par l'ensemble des pixels constituant le super-pixel imagé avec la facette. La modulation du signal crée par la variation de phase est échantillonnée en respectant le critère de Nyquist, un nombre N d'échantillons est acquis par facette de Différence De Marche.

La variation de différence de marche est, dans ce mode de réalisation, réalisée par une inclinaison du miroir à échelettes horizontales EH de manière à créer, sur chaque facette, un coin d'air provoquant un système de franges dans le plan du dispositif de détection DET. Le coin d'air est réglé pour obtenir typiquement une ou plusieurs franges par facette. Il est recommandé d'acquérir au moins une frange dans le cas de la bande spectrale qui présente la plus grande longueur d'onde centrale. L'inclinaison d'un des miroirs du système d'interférométrie crée un coin d'air. L'image du coin d'air dans le plan du dispositif de détection DET est à l'origine d'un système de franges par facette de différence de marche, tel qu'illustré sur la figure 9.

L'inclinaison, exprimée en radians, vaut sensiblement la valeur définie par l'expression suivante :

$$(\lambda/2)/(N \times L \arg Ech)$$

dans laquelle

λ représente la longueur d'onde centrale de la bande spectrale du signal incident, en m ;
LargEch représente la largeur d'une échelette, en m ; et
N représente le nombre de franges désirées par facette.

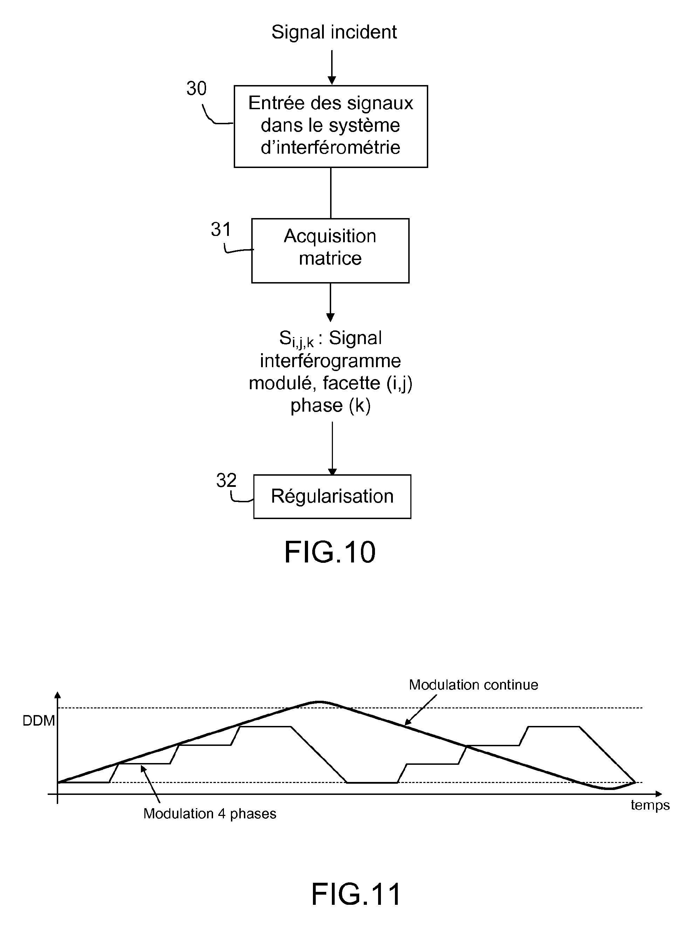

Tel qu'illustré sur la figure 10, le signal incident ou signal atmosphérique est reçu (étape 30) par un système d'interférométrie selon un aspect de l'invention. Lors d'une acquisition (étape 31), l'ensemble des signaux S(i,j,k) correspondant aux Différences de Marche $DDM_{i,j}$ et aux phases k sont acquis simultanément. Ce mode de réalisation ne nécessite pas de source laser si le dispositif interférométrique est suffisamment stable pour permettre une régularisation (étape 32) à partir d'une mesure de différence de marche préalable à la mise en opération du dispositif.

Quelque soit le mode de réalisation cité précédemment mis en oeuvre, on peut appliquer le traitement des données qui suit.

Le traitement des données proposé permet pour tout nombre d'échantillons N acquis supérieur à 4, la restitution de deux informations en quadrature de phase (déphasées de π/2) par différence de marche, comme préconisé selon les explications qui suivent.

Considérons les vecteurs à N composantes Vcos(k) et Vsin(k) du cosinus et du sinus normalisés :

$$\vec{V}_{\cos}(k) = \frac{1}{P_{\cos}} \cos\left( 2\pi N(k-1) \middle/ K \right)$$

$$\vec{V}_{\sin}(k) = \frac{1}{P_{\sin}} \sin\left( 2\pi N(k-1) \middle/ K \right)$$

Dans lesquels :

N représente le nombre de franges acquis par différence de marche ;
K représente le nombre d'échantillons acquis sur les N franges ; et
$P_{\cos}$ et $P_{\sin}$ représentent des coefficients normalisateurs.

Les deux Vecteurs discrets précédents sont pratiquement orthogonaux, ou, en d'autres termes de produit scalaire nul, car l'intégrale de la fonction sinus(x).cosinus(x) sur une ou plusieurs périodes est de valeur nulle.

$$\frac{1}{P_{\cos}} \frac{1}{P_{\sin}} \sum_{k=1}^{K} \cos\left( 2\pi N(k-1) \middle/ K \right) \times \sin\left( 2\pi N(k-1) \middle/ K \right) \approx 0$$

Le produit scalaire du vecteur $S_{i,j,k}$ (signal interférogramme modulé de la facette d'indices i,j et d'indice de phase k) et des vecteurs $V_{\cos}$ et $V_{\sin}$ fournit, pour une facette donnée d'indices i,j les deux coefficients suivants:

$$a_1(i,j) = \frac{1}{P_{\cos}} \sum_{k=1}^{N} S_m(i,j,k) \cos\left( 2\pi N(k-1) \middle/ K \right)$$

$$a_2(i, j) = \frac{1}{P_{\sin}} \sum_{k=1}^{N} S_m(i, j, k) \sin\left(\frac{2\pi N(k-1)}{K}\right)$$

dans lesquels :

S(i,j,k) représente le signal de la facette de Différences de Marche DDM$_{i,j}$ et de phase k

Les deux coefficients a$_1$(i,j) et a$_2$(i,j) obtenus par facette (i,j) sont le résultat d'une combinaison linéaire à coefficients constants des K interférogrammes par facette (i,j) initiaux. Ce traitement est équivalent à un filtrage et une compression de l'information de départ. Deux informations en quadrature sont obtenues par facette de différence de marche.

On est alors dans une situation comparable à celle de la modulation quatre phases pour le nombre de points et leur déphasage respectif.

Il y a toutefois une différence a priori avec l'acquisition quatre phases pour laquelle la différence de signaux deux à deux permet d'éliminer la ligne de base et la composante continue (i. e. non modulée).

On peut obtenir cette élimination en faisant en sorte que la somme algébrique des composantes de chacun des deux vecteurs V$_{\cos}$(k) et V$_{\sin}$(k) soit nulle, ce qui est possible en adaptant le nombre de points K ou en forçant arbitrairement la dernière composante de chaque vecteur de sorte que la somme des composantes soit effectivement nulle.

Cette dernière condition s'écrit :

$$\vec{V}_{\cos}(N) = -\sum_{k=1}^{N-1} \vec{V}_{\cos}(k)$$

$$\vec{V}_{\sin}(N) = -\sum_{k=1}^{N-1} \vec{V}_{\sin}(k)$$

En modulation continue, le déplacement pas à pas, ou "step and dwell" en langue anglaise, d'une acquisition quatre phases est remplacé par un déplacement continu de la charge utile au cours de la phase d'analyse.

Tel que représenté sur la figure 11, pour une modulation continue, le mouvement est une sinusoïde redressée de période typiquement de l'ordre de 500 ms, et la bande passante d'asservissement est de l'ordre de 50 Hz. Tandis que dans le cas d'une acquisition à quatre phases, le temps de front de montée est typiquement de l'ordre de 5 ms ce qui nécessite une bande passante d'asservissement de l'ordre de 1 kHz. Le rapport des bandes passantes, de l'ordre de 20, est un avantage significatif de la modulation de phase continue, en particulier lorsque la masse de la charge utile optique (supérieure au kg) génère des modes mécaniques dans le domaine de la bande passante de l'acquisition à quatre phases.

En modulation quatre phases, le couplage entre les modes mécaniques et la loi de contrôle du mécanisme se traduit par un risque important de présence de micro-vibrations qui se traduit par une perte potentielle de contrôle du positionnement de la charge utile et la génération d'efforts exportés vers l'interface. En modulation continue, cet inconvénient est gommé par la faible bande passante d'asservissement.

La présence d'une source laser due au besoin d'une horloge de référence utilisée pour déclencher l'échantillonnage des interférogrammes à DDM constant (fabriquée à partir de la détection du passage à zéro des franges d'interférence du faisceau laser) permet d'obtenir une connaissance très fine des différences de marche (de l'ordre du nanomètre).

Dans le cas de l'inclinaison d'un des deux miroirs du système d'interférométrie, pour créer un système de franges régulièrement échantillonnées en N valeurs de phase, il est possible de réaliser une acquisition en quadrature de phase sans imposer des tolérances sévères sur l'inclinaison des miroirs.

En comparaison avec un concept de modulation à quatre phases ou dynamique, une modulation continue statique permet la suppression d'un mécanisme complexe, présentant des risques de développements importants et induisant un surcoût significatif pouvant atteindre plusieurs millions d'euros.

En comparaison avec un concept statique classique sans modulation de phase, l'invention permet les mêmes avantages que la modulation en quadrature, puisqu'elle s'y ramène. Le principe statique à modulation continue permet en effet d'obtenir pour chaque facette un couple de points en quadrature (par un moyen statique) et ainsi d'obtenir un gain d'un facteur racine de deux sur la spécification de besoin en rapport signal à bruit, la réduction d'un facteur deux du besoin en nombre d'échelettes, et implique un dimensionnement du système identique à celui réalisé en modulation de phase en quadrature. En outre, tout comme la modulation en quadrature, l'invention permet de supprimer l'étape, critique en statique, de suppression de la ligne de base, car la modulation est extraite du signal par l'application de coefficients dont la somme est égale à zéro. La ligne de base (partie constante) est supprimée. L'invention permet également de diminuer la sensibilité aux non-uniformités du dispositif de détection, car la modulation est extraite du signal par l'application de coefficients, ce qui représente une étape de filtrage (spatial) des signaux. Ce filtrage diminue l'impact des non-uniformités de réponse du dispositif de détection. Enfin, l'invention facilite le processus d'égalisation, car ce dernier est facilité par le filtrage spatial qui réduit fortement la dépendance vis à vis des non-uniformités à basses fréquences. Notamment une mesure des variations de réponse inter-pixels basée sur l'observation du corps noir est envisageable sur l'interférogramme (hors frange centrale).

**Revendications**

1. Système d'interférométrie statique comprenant deux miroirs réalisés respectivement par assemblage vertical (EH) et horizontal (EV) d'un ensemble de lames parallèles de largeur constante, décalées le long de l'axe optique de manière à former des échelettes de différence de marche variable, lesdits deux miroirs à échelettes (EH, EV) étant disposés orthogonalement de manière à former, par superposition optique, un ensemble de facettes carrées provoquant des différences de marche différentes pour le signal incident, et un dispositif de détection (DET) de l'ensemble des différences de marche de l'interférogramme résultant, **caractérisé en ce qu'**il comprend, en outre, des moyens de variation continue (LC) de la différence de marche, et des moyens d'échantillonnage (S, ACQL) pour échantillonner la différence de marche continue acquise en respectant le critère de Nyquist.

2. Système selon la revendication 1, dans lequel lesdits moyens de variation continue sont adaptés pour effectuer une modulation de phase à défilement continu dynamique, de sorte que la phase du signal varie sensiblement linéairement en fonction du temps d'acquisition de la différence de marche par ledit dispositif de détection, et les moyens d'échantillonnage sont adaptés pour échantillonner la différence de marche à pas constant par un signal issu d'une source laser.

3. Système selon la revendication 2, dans lequel lesdits moyens de variation continue comprennent une lame compensatrice (LC) et des moyens de mise en rotation de ladite lame compensatrice.

4. Système selon la revendication 2, dans lequel lesdits moyens de variation continue comprennent une lame compensatrice présentant un biseau et des moyens de mise en translation de ladite lame compensatrice.

5. Système selon la revendication 2, dans lequel lesdits moyens de variation continue comprennent deux lames compensatrices, et des moyens de mise en rotations opposées desdites lames compensatrices.

6. Système selon la revendication 2, dans lequel lesdits moyens de variation continue comprennent deux lames compensatrices présentant des biseaux opposés et des moyens de mise en translations opposées desdites lames compensatrices.

7. Système selon la revendication 2, dans lequel lesdits moyens de variation continue comprennent des moyens de mise en translation d'au moins un desdits miroirs à échelettes (EH, EV).

8. Système selon l'une des revendications 2 à 7, dans lequel lesdits moyens d'échantillonnage sont adaptés pour échantillonner la différence de marche à pas de différence de marche constant par un signal issu de ladite source laser.

9. Système selon l'une des revendications 2 à 7, dans lequel lesdits moyens d'échantillonnage sont adaptés pour échantillonner la différence de marche à pas de temps constant.

10. Système selon la revendication 1, dans lequel lesdits moyens de variation continue comprennent une inclinaison d'un desdits miroirs à échelettes (EH, EV) créant pour chaque différence de marche de facette un ensemble de franges statiques dans le plan dudit dispositif de détection (DET).

**11.** Système selon la revendication 10, dans lequel ladite inclinaison, exprimée en radians, vaut sensiblement la valeur définie par l'expression suivante :

$(\lambda/2)/(N \times Larg\ Ech)$
dans laquelle
$\lambda$ représente la longueur d'onde centrale de la bande spectrale du signal incident, en m ;
LargEch représente la largeur d'une échelette, en m ; et
N représente le nombre de franges désirées par facette.

**12.** Procédé d'interférométrie statique utilisant deux miroirs réalisés respectivement par assemblage vertical (EV) et horizontal (EH) d'un ensemble de lames parallèles de largeur constante, décalées le long de l'axe optique de manière à former des échelettes de différence de marche variable, lesdits deux miroirs à échelettes étant disposés orthogonalement de manière à former, par superposition optique, un ensemble de facettes carrées provoquant des différences de marche différentes pour le signal incident, et un dispositif de détection (DET) de l'ensemble des différences de marche de l'interférogramme résultant, **caractérisé en ce que** l'on fait varier continûment la différence de marche durant l'acquisition de données par le dispositif de détection, et on échantillonne la différence de marche continue acquise en respectant le critère de Nyquist.

S(i,j) : Signal facette (I,j)

Colonne j

Ligne i

DET

LC

LS

EH

LEN

Signal
entrée

EV

FIG.1

Echantillonnage (Shannon)　　　　Sans échantillonnage (Shannon généralisé)

$\sigma_{max}$ utile

$\sigma_{max}=1/2\delta$ech

$\sigma_{min}$ utile　　$\Delta\sigma = 1/2\delta$ech

Domaine à spectre large sans
information spectrale inutile

$[\sigma_{min\ utile} ; \sigma_{max\ utile}] \subset [p\Delta\sigma ; p\Delta\sigma + \Delta\sigma]$
avec p entier

## FIG.2a

## FIG.2b

## FIG.3

L'acquisition en quadrature donne une information sur
l'enveloppe des franges pour toutes les valeurs de
différence de marche acquises

## FIG.4

Durée d'analyse DA

Phase

I4

I3

I2

I1

**Modulation de phase** Temps

MD1

MD2

DET

D

LC

EH

LEN

LS

EV

FIG.5

Echantillonnage signal S(i,j)

S(i,j,k) : Signal facette (l,j), échantillon k

Durée d'analyse DA

Phase

Temps

**Modulation de phase**

MD2

Colonne j

Ligne i

MD1

Horloge
d'échantillonnage

LEN

D

EH

LC

ACQL

S

Signal
incident

LS

EV

FIG.6

Signal incident — 11

Entrée des signaux dans le système d'interférométrie

Emission LASER — 10

Signal LASER

$S_{i,j}$ : Signal interférogramme facette (i,j)

Modulation de phase — 12

$S_{i,j}$ (temps): Signal interférogramme modulé facette (i,j)

Acquisition signal LASER — 13

DDM$_{i,j}$ : mesure des DDM facette (i,j) — 16

Génération horloge LASER — 14

Echantillonnage — 15

$S_{i,j,k}$ : Signal interférogramme modulé facette (i,j) phase (k)

Régularisation — 17

Echantillonnage à pas de temps constant

FIG.7a

Signal incident

11

Entrée des signaux
dans le système
d'interférométrie

$S_{i,j}$ : Signal
interférogramme
facette (i,j)

Modulation
de phase

12

$S_{i,j}$ (temps): Signal
interférogramme
modulé facette (i,j)

Echantillonnage

19

$S_{i,j,k}$ : Signal
interférogramme
modulé facette (i,j)
phase (k)

Régularisation

20

Echantillonnage à pas de DDM constant

Emission
LASER

10

Signal LASER

Acquisition
signal
LASER

13

DDM$_{i,j}$ : mesure des
DDM facette (i,j)
phase k

16

Génération
horloge

18

## FIG.7b

**FIG.8**

Echantillonnage signal S(i,j)

Le miroir est incliné

Colonne j

S(i,j) : Signal pixel k super-pixel (I,j)

Ligne i

Signal incident

EH

LS

**FIG.9**

Signal incident

30    Entrée des signaux dans le système d'interférométrie

31    Acquisition matrice

$S_{i,j,k}$ : Signal interférogramme modulé, facette (i,j) phase (k)

32    Régularisation

## FIG.10

DDM

Modulation continue

Modulation 4 phases

temps

## FIG.11

**EP 2 264 416 A1**

Europäisches
Patentamt

European
Patent Office

Office européen
des brevets

# RAPPORT DE RECHERCHE EUROPEENNE

Numéro de la demande

EP 10 16 6380

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | FR 2 787 186 A (CENTRE NAT ETD SPATIALES [FR]) 16 juin 2000 (2000-06-16) <br> * page 4, ligne 1 - ligne 22 * <br> * figures 2-4 * <br> ----- | 1-12 | INV. <br> G01J3/45 <br> G01J3/453 |
| Y | US 5 155 551 A (VIDRINE D WARREN [US] ET AL) 13 octobre 1992 (1992-10-13) <br> * colonne 2, ligne 67 - colonne 3, ligne 2 * <br> * colonne 3, ligne 55 - ligne 58 * <br> * colonne 7, ligne 14 - colonne 8, ligne 49 * <br> * figures 15,16 * <br> ----- | 1-12 | |
| Y | US 3 482 919 A (BARRINGER ANTHONY RENE) 9 décembre 1969 (1969-12-09) <br> * colonne 1, ligne 23 - ligne 28 * <br> * colonne 2, ligne 1 - ligne 5 * <br> * colonne 2, ligne 68 - colonne 3, ligne 5 * <br> * colonne 3, ligne 60 - ligne 62 * <br> * colonne 7, ligne 11 - ligne 32 * <br> * figure 1 * <br> ----- | 1,12 | |
| A | EP 0 767 361 A (C I SYSTEMS ISRAEL LTD [IL]; CABIB DARIO [IL]; FRIEDMAN ZVI [IL]; LIPS) 9 avril 1997 (1997-04-09) <br> * page 8, ligne 48 - ligne 49 * <br> * page 11, ligne 11 - ligne 13 * <br> ----- | 1,12 | |

DOMAINES TECHNIQUES RECHERCHES (IPC)

G01J

Le présent rapport a été établi pour toutes les revendications

| Lieu de la recherche | Date d'achèvement de la recherche | Examinateur |
|---|---|---|
| Munich | 13 juillet 2010 | Jacquin, Jérôme |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 16 6380

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-07-2010

| Document brevet cité au rapport de recherche | | Date de publication | Membre(s) de la famille de brevet(s) | | Date de publication |
|---|---|---|---|---|---|
| FR 2787186 | A | 16-06-2000 | AUCUN | | |
| US 5155551 | A | 13-10-1992 | AUCUN | | |
| US 3482919 | A | 09-12-1969 | BE | 706826 A | 01-04-1968 |
| | | | CH | 465907 A | 30-11-1968 |
| | | | DE | 1572599 A1 | 19-02-1970 |
| | | | GB | 1195839 A | 24-06-1970 |
| EP 0767361 | A | 09-04-1997 | GR | 3033470 T3 | 29-09-2000 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2787186